**Europäisches Patentamt**

**European Patent Office**

**Office européen des brevets**

(19)

(11) Veröffentlichungsnummer: **0 124 781**

**A1**

(12)

# EUROPÄISCHE PATENTANMELDUNG

(21) Anmeldenummer: 84103835.9

(22) Anmeldetag: 06.04.84

(51) Int. Cl.³: **G 11 B 5/42**

(30) Priorität: 07.05.83 DE 3316747

(43) Veröffentlichungstag der Anmeldung:
14.11.84 Patentblatt 84/46

(84) Benannte Vertragsstaaten:
DE FR GB IT

(71) Anmelder: GRUNDIG E.M.V. Elektro-Mechanische
Versuchsanstalt Max Grundig & Co. KG.
Kurgartenstrasse 37
D-8510 Fürth(DE)

(72) Erfinder: Mangold, Hans

verstorben(DE)

(72) Erfinder: Kotter, Karl-Heinz
Ackerstrasse 10
D-8502 Zirndorf-Weiherhof(DE)

(72) Erfinder: Uhde, Dietmar
Eibenstrasse 9
D-8502 Zirndorf-Weiherdorf(DE)

(54) Magnetkopf und Verfahren zu seiner Herstellung.

(57) Die Erfindung bezieht sich auf einen Magnetkopf für Aufzeichnungs- und/oder Wiedergabegeräte, insbesondere mit kleiner Spurbreite und extrem kleiner Spaltbreite sowie auf ein Verfahren zu seiner Herstellung, wobei durch Verwendung von Siliconharz oder einer Siliconharz-Polyester-Kombination als Bindemasse 5 die Kernhälften 1a, 1b im Spaltbereich vorspennungsfrei und chemisch vollkommen reaktionsneutral zusammengehalten werden.

FIG.1

EP 0 124 781 A1

## MAGNETKOPF UND VERFAHREN ZU SEINER HERSTELLUNG

### BESCHREIBUNG

Die Erfindung betrifft einen Magnetkopf für Aufzeichnungs- und/oder Wiedergabegeräte und ein Verfahren zu seiner Herstellung. Die wesentlichen Einzelteile sind zwei weichmagnetische Kernhälften, ein unmagnetischer Arbeitsspalt, eine Bindemasse zum Zusammenhalt der Kernhälften und Spulenwindungen.

In der Unterhaltungselektronik, insbesondere bei Video-Magnetbandgeräten finden Magnetköpfe mit kleinen Spurbreiten und extrem kleinen Spaltbreiten weitverbreitete Anwendung. Bei Magnetköpfen für Videorecorder des Systems Video 2000 beträgt die Spurbreite beispielsweise nur 22,5 $\mu$m und die Spaltbreite nur wenige Zehntel-Mikrometer. Dies hat zur Folge, daß die Gesamtabmessungen derartiger Magnetköpfe ebenfalls sehr klein sind. Zur Verbesserung der mechanischen Stabilität derartiger Magnetköpfe ist es üblich, die Kernhälften breiter auszulegen als die Spurbreiten. Um dies auch in der Serienproduktion zu erreichen, werden die Kernhälften im Polbereich mit Nuten, sogenannten Mikroprofilen versehen, die noch vor der Endbearbeitung, d. h. dem Schleifen, Läppen und Polieren, mit einer Bindemasse, beispielsweise aus Glaslot oder Kunstharz, gefüllt werden.

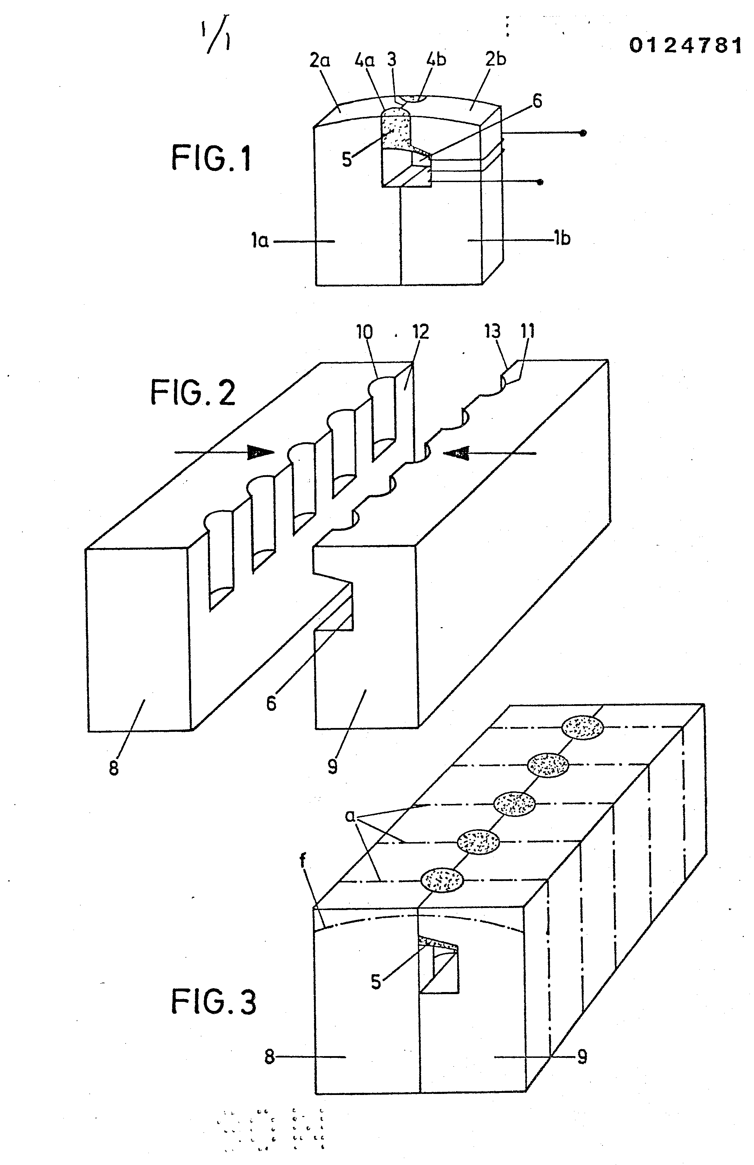

Bei der herkömmlichen Herstellung begrenzen zwei Nute 4a und 4b die Spaltlänge, wie in Figur 1 dargestellt, und erstrecken sich in Richtung der Spalttiefe. Sie sind mit einer Bindemasse 5 gefüllt. Die Kernhälften 1a und 1b begrenzen in ihrem Polbereich den Arbeitsspalt 3 bezüglich seiner Spaltbreite, und bilden mit ihren Polflächen 2a und 2b den wesentlichen Teil der Bandkontaktfläche. Die eine der beiden Kernhälften 1b ist in ihrem Freiraum 6 mit Spulenwindungen versehen. Das unmagnetische Spaltmaterial des Arbeitsspaltes wird noch vor dem Einfüllen der Verbindungsmasse in die Nute als Spaltfüller auf die gegenüberliegenden Flächen der Kernpole aufgebracht.

Die bei den bekannten Magnetkopf-Technologien verwendeten Bindemassen bieten keine optimalen Voraussetzungen als Magnetkopf-Werkstoff. Bindemassen auf Epoxydharz-Basis haben schlechte Abriebeigenschaften im Vergleich zu den extrem harten Kernwerkstoffen. Dieser Nachteil kann durch Füllstoffe nur geringfügig gemildert werden.

Bindemassen auf Glas oder Glaslot-Basis bedingen sehr hohe Schmelztemperaturen, erzeugen Vorspannungen in den Kernpolen und sind in der Regel chemisch aggressiv gegenüber dem Kernwerkstoff. Letzteres bedeutet eine Vergrößerung des Arbeitsspaltes. Die sonstigen genannten Nachteile laufen auf eine Verschlechterung des Wirkungsgrades hinaus. Die zur Glasverlötung erforderliche hohe Temperatur bedingt außerdem eine sorgfältig überwachte Glühatmosphäre, was sich als nicht unbeträchtlicher Kostenfaktor niederschlägt. Mit der DE-OS 30 11 696 ist neuerdings ein Magnetkopf-Herstellungsverfahren bekanntgeworden, bei dem die Kernhälften und insbesondere die Kernpole, durch nachträgliches Erhitzen (Glühen) auf eine Temperatur über dem Deformationspunkt der verwendeten Glas-Bindemasse, entspannt werden sollen. Sowohl diese als auch sonstige bekannte nachträgliche Glühbehandlungen bewirken jedoch eine Lockerung des Arbeitsspaltes und damit undefinierte Spaltbreitenänderungen.

Der Erfindung liegt die Aufgabe zugrunde, einen Magnetkopf mit kleiner Spaltlänge und extrem kleiner Spaltbreite zu schaffen, dessen zwei Kernhälften, insbesondere im Spaltbereich, durch eine gegenüber dem Kernmaterial chemisch vollkommen reaktionsneutrale Bindemasse vorspannungsfrei zusammengehalten werden.

Die Aufgabe wird erfindungsgemäß durch Verwendung eines Siliconharzes (Polyphenylmethylsiloxan) als Bindemasse gelöst. Bei der erfindungsgemäßen Bindemasse handelt es sich um Siliconharze des Grundtyps $\left[ R_2 - Si - O \right]_n$, wobei R für einen organischen Methyl$(CH_3)$- oder Phenyl$(C_6H_5)$-Rest steht und n je nach Vernetzungsgrad eine relativ hohe Zahl ($>10^4$) sein kann. Gemäß einer Ausweitung der Erfindung ist eine Siliconharz-Polyester-Kombination, insbesondere bestehend aus 50 % Polyester + 50 % Siliconharz + Lösemittel, die im ausgehärteten Zustand ca. 25 Masse% $SiO_2$ enthält, ebenfalls gut als Bindemasse geeignet. Die verschleißmäßige Angleichung der Siliconharz-Verbindungsmasse an den Kernwerkstoff, der in bekannter Weise aus Ferrit, Alfenol, Alfesil (Sendust) oder einem amorphen Metall bestehen kann, erfolgt im Einzelfall durch Beigabe eines an den Kernwerkstoff angepaßten Füllstoffes. Folge der erfindungsgemäßen Maßnahmen ist ein absolut exakter Arbeitsspalt, ein optimaler Wirkungsgrad und eine extrem lange Lebensdauer infolge geringer Verschleißerscheinungen.

Das erfindungsgemäße Herstellungsverfahren wird im folgenden anhand der Figuren 2 und 3 näher erläutert. Es zeigen:

Fig. 1    den bearbeiteten Magnetkopf,

Fig. 2    die Bearbeitung der Halbblöcke,

Fig. 3    die Bearbeitung des Gesamtblocks.

Figur 2 zeigt perspektivisch einen an sich bekannten wichtigen Verfahrensschritt zur Herstellung eines erfindungsgemäßen Magnetkopfes. Ausgangspunkt der Herstellung bilden zwei weichmagnetische Werkstoffblöcke 8, 9. Sie werden mit Nuten 6, 10, 11 versehen und an den polierten Spalt-Überlappungsflächen 12, 13 mit unmagnetischem Spaltmaterial beschichtet. Die beiden Werkstoffblöcke 8, 9 werden, wie durch die beiden Pfeile in Figur 2 angedeutet, gegeneinandergedrückt und die Nute im Spaltbereich mit der erfindungsgemäßen Bindemasse gefüllt. Die Bindemasse wird bei niedriger Temperatur ausgehärtet. Sie verbindet die beiden Werkstoffblöcke zu einem Gesamtblock. Die Weiterverarbeitung des Gesamtblocks zu Einzelköpfen ist in Figur 3 dargestellt. Durch die sogenannte Endbearbeitung, bestehend aus Schleifen, Läppen und Polieren, wird die Bandkontaktfläche entlang der in Figur 3 angedeuteten Linie f erzeugt, und der Gesamtblock schließlich durch Zersägen entlang der angedeuteten Linien a in Einzelköpfe zerlegt, die noch mit Spulenwindungen versehen werden.

MAGNETKOPF UND VERFAHREN ZU
SEINER HERSTELLUNG

PATENTANSPRÜCHE

1. Magnetkopf mit zwei weichmagnetischen Kernhälften, einem unmagnetischen Arbeitsspalt zwischen den Kernpolen, einer Kunstharz-Bindemasse zum Zusammenhalt der Kernhälften im Arbeitsspaltbereich und Spulenwindungen um mindestens eine Kernhälfte, d a d u r c h  g e k e n n z e i c h n e t , daß die Bindemasse aus einem bei niedriger Temperatur ($< 250 \,^{\circ}C$) aushärtenden Siliconharz (Polyphenylmethylsiloxan) vom Typ $\left[ R_2 - Si - O \right]_n$, besteht, wobei R für einen organischen Methyl($CH_3$)- oder Phenyl($C_6H_5$)-Rest steht.

2. Magnetkopf nach Anspruch 1, d a d u r c h  g e k e n n z e i c h n e t ,  daß die Bindemasse aus einer Siliconharz-Polyester-Kombination besteht.

3. Magnetkopf nach Anspruch 1 und Anspruch 2, d a d u r c h   g e k e n n z e i c h n e t ,   daß die Siliconharz-Polyester-Kombination aus 50 % Polyester + 50 % Siliconharz + Bindemittel besteht.

FIG.1

FIG.2

FIG.3

## EUROPÄISCHER RECHERCHENBERICHT

| | EINSCHLÄGIGE DOKUMENTE | | EP 84103835.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - A - 1 774 758</u> (TELEFUNKEN)  <br> * Anspruch 1; Seite 1, Zeilen 13-19 *  <br> -- | 1-3 | G 11 B 5/42 |
| A | <u>DE - A1 - 2 909 280</u> (AKAI)  <br> * Anspruch 7 *  <br> -- | 1-3 | |
| A | <u>DE - A1 - 2 754 536</u> (VICTOR)  <br> * Ansprüche 1-12 *  <br> -- | 1 | |
| D,A | <u>DE - A1 - 3 011 696</u> (MATSUSHITA)  <br> * Fig. 1-8 *  <br> -- | 1 | |
| A | <u>US - A - 4 246 620</u> (KAMINAKA)  <br> * Spalte 4, Zeilen 24-29 *  <br> ----- | 1 | |

**RECHERCHIERTE SACHGEBIETE (Int. Cl. ³)**

G 11 B 5/00

Der vorliegende Recherchenbericht wurde für alle Patentansprüche erstellt.

| Recherchenort | Abschlußdatum der Recherche | Prüfer |
|---|---|---|
| WIEN | 13-07-1984 | BERGER |

EPA Form 1503. 03.82